(19) Europäisches Patentamt
European Patent Office
Office européen des brevets

(11) Publication number: **0 410 650 A1**

# (12) EUROPEAN PATENT APPLICATION

(21) Application number: **90307918.4**

(22) Date of filing: **19.07.90**

(51) Int. Cl.5: **C08G 69/28**, C08G 69/30

(30) Priority: **27.07.89 GB 8917156**

(43) Date of publication of application:
**30.01.91 Bulletin 91/05**

(84) Designated Contracting States:
**AT BE CH DE DK ES FR GB GR IT LI LU NL SE**

(71) Applicant: **BP Chemicals Limited**
**Belgrave House 76 Buckingham Palace Road**
**London, SW1W 0SU(GB)**

(72) Inventor: **Taylor, Stephen Alan, BP Chemicals Limited**
**Bo'ness Road, Grangemouth**
**Stirlingshire, FK3 9XH Scotland(GB)**
Inventor: **Studholme, Matthew Benjamin, BP Chemicals Limited**
**Bo'ness Road, Grangemouth**
**Stirlingshire, FK3 9XH Scotland(GB)**
Inventor: **Orpin, Murray Roy, BP Chemicals Limited**
**Barry Business Centre, Sully**
**South Glamorgan, CF6 2YU Wales(GB)**

(74) Representative: **Krishnan, Suryanarayana Kalyana et al**
**BP INTERNATIONAL LIMITED Patents & Agreements Division Chertsey Roadoad**
**Sunbury-on-Thames Middlesex TW16 7LN(GB)**

## (54) Process for the preparation of polyamide prepolymers.

(57) This invention relates to a process for producing polyamide prepolymers having a number average molecular weight of 3000 to 5000 by condensation of solid nylon salts formed from dicarboxylic acids and diamines in stoichiometric amounts characterised in that the condensation is carried out in the presence of a catalyst under the influence of heat and vacuum in an extruder.

These prepolymers can be used as feedstock for producing high molecular weight polyamides which in turn can be fabricated into articles such as films, pipes etc.

EP 0 410 650 A1

DIAGRAM 1

Schematic representation of extruder set-up

(Preparation of TPA/TMHMD prepolymer by reactive extrusion)

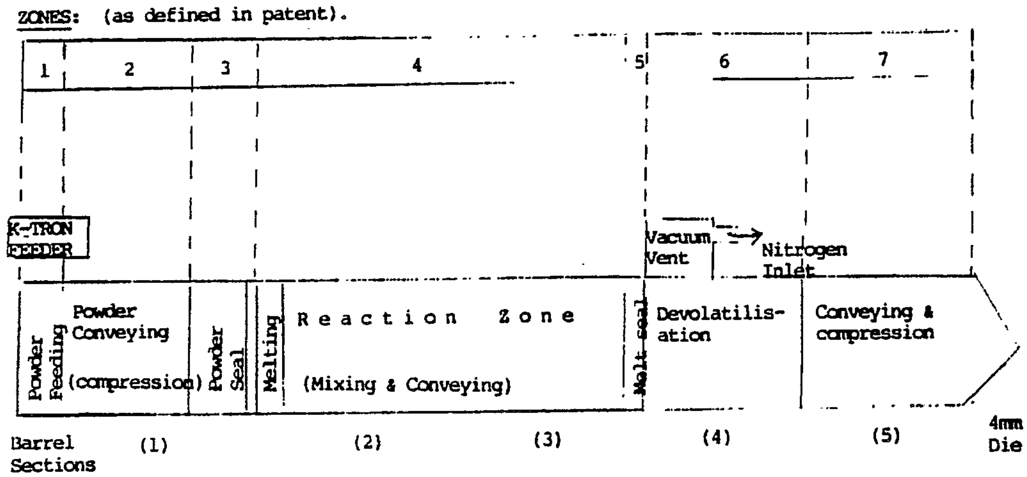


BETOL BTS 40 Twin-Screw extruder (21:1 L/D)

# PROCESS FOR THE PREPARATION OF POLYAMIDE PREPOLYMERS

This invention relates to a novel process for the preparation of polyamide prepolymers from a nylon salt (stoichiometric adduct of dicarboxylic acid and diamine, with a zwitter ion structure) feedstock. The resulting prepolymers may, in turn, form a stable feedstock for the formation of high molecular weight polyamides, suitable for processing into fabricated articles and the like.

In a typical batch production process for the formation of oligomers of hexamethylene diammonium adipamide (nylon salt precursor to nylon -6,6), a 65% aqueous solution of the salt is heated in a suitable stirred reactor to elevated temperatures (eg 200 °C). The vessel is sealed during this operation to generate steam pressure and to ensure that diamine loss during the operation is minimised. In order to progressively concentrate the reaction mixture, the temperature is gradually raised to 275 °C whilst the steam pressure is reduced to maintain a constant pressure in the vessel. When the temperature of 275 °C is attained the pressure is further reduced gradually to atmospheric pressure. The thus formed prepolymer melt is discharged to a so-called finishing device to increase molecular weight to a desired level.

Such a batch process is ideally suited to reacting nylon salt compositions which remain in the state of a low viscosity liquid (either in solution or as a melt) or which form dry powders capable of being easily agitated over a very short temperature range which lies between a nylon salt slurry in water and a melt. Such examples include hexamethylene diammonium adipamide, discussed above, and polyamide compositions hereafter designated Type H, which are derivable from a combination of isophthalic acid (IPA), terephthalic acid (TPA), hexamethylene diamine (HMD) and isophorone diamine (IPD).

However, certain preferred nylon salt compositions, upon progressive concentration as described above, become dry cakes over a wide temperature range and therefore lead to agitation and heat transfer problems. In addition, for polyamide compositions which exhibit high glass transition temperatures (eg >150 °C), the melt becomes very viscous at the polymerisation temperatures used, and is thus difficult to stir in conventional batch reactors. Discharge from the reactor is also problematical, with considerable wastage occurring due to the prepolymer melt adhering to the walls of the vessel. Typical examples of such compositions are polyamide compositions designated Type M and Type MB which are derivable from a combination ofTPA/HMD/trimethylhexamethylene diamine (TMHMD)/m-xylylenediamine (MXD). TMHMD is used as a mixture of 2,2,4 and 2,4,4 isomers. MXD may be used either as pure meta-substituted diamine or in combination with small quantities of the para-substituted isomer.

With respect to the polyamides now desired similar problems exist. For instance, a reaction mixture for Type H polyamide, under atmospheric pressure, remains as a slurry right up until the melt temperature of the nylon salt is reached. This probably results from the presence of the IPA/HMD nylon salt which has (i) a much higher affinity for water and (ii) a relatively low melting point (215 °C) as compared with other nylon salts comprising aromatic ring structures. Conversely, the reaction mixtures for Type M and Type MB polyamides differ in that as the water is boiled off during progressive concentration, a dry cake of salts is formed at a temperature of only 105 °C. This remains as such until the melting point of the nylon salt compositions is reached at about 240 °C. In addition, in order to form prepolymers of acceptable molecular weight, it is desirable to include a solid-state reaction step as part of the process, comprising 1 hour at 180 °C prior to raising the temperature of the salt to its melt temperature. Whilst this may be achieved with some success on the laboratory scale, such solid state reaction steps are difficult to perform, even at higher temperatures, in aiding large scale production of polyamide prepolymers.

It has now been found that such problems as outlined above can be mitigated by carrying out polyamide prepolymer formation in an extruder.

Accordingly, the present invention is a process for producing polyamide prepolymers having a number average molecular weight from 3000-5000, said prepolymers being derivable by condensation of solid nylon salts formed from monomeric dicarboxylic acid(s) and monomeric diamine(s) in stoichiometric amounts, characterised in that the condensation process is carried out in the presence of a catalyst under the influence of heat and vacuum in an extruder.

The feature of the invention is not the use of an extruder per se, but the use of the extruder under conditions of heat and vacuum to produce polyamide prepolymers via the melt condensation of solid nylon salts, especially those which give rise to problems in the early stages of polycondensation during conventional batch processing.

The extruder is suitably a screw extruder, preferably a twin-screw extruder of the fully intermeshing screw type with both screws rotating in the same direction, although other twin-screw extruder types eg counter-rotating, non-intermeshing can also be used. A typical extruder of the co-rotating fully intermeshing screw type is one in the Betol BTS range, especially the BTS 40 model. A machine of 21 diameters length was used for the purpose of the invention, although this may be optionally extended if desired.

The solid nylon salt feedstock can be an adduct of a monomeric aromatic dicarboxylic acid e.g. terephthalic acid (TPA), isophthalic acid (IPA), or 2,6-naphthalene dicarboxylic acid (NDA) and a monomeric aliphatic, cycloaliphatic or aromatic diamine e.g. hexamethylene diamine (HMD), trimethylhexamethylene diamine (TMHMD) (mixture of 2,2,4 and 2,4,4 isomers), isophorone diamine (IPD), meta- and para- xylylene diamine (MXD and PXD), dodecamethylene diamine (DDMD) and 4,4′-methylenebis(cyclohexylamine) (MBCHA).

The prepolymers produced by the process of the present invention suitably have an inherent viscosity of up to 0.4 $dlg^{-1}$ corresponding to a number average molecular weight of 5000.

A significant feature of the invention is the way in which the twin screw extruder is used to prepare certain polyamide prepolymers which have good colour and are capable of being polymerised further to higher molecular weights. A range of nylon salt compositions were evaluated which used TPA/TMHMD salts as feedstock. This is a major component in both Type M and Type MB polyamide compositions.

To accelerate the rate of polycondensation during extrusion, a catalyst or mixture of catalysts can be added to and thoroughly dispersed in the nylon salt feedstock prior to feeding into the extruder. Typical catalysts include polyphosphoric acid, ammonium hypophosphite, metal hypophosphites and the like. In the present process, the preferred catalyst is a finely powdered ammonium hypophosphite blended into the salt at a level of 0.025 - 0.25% by weight, preferably at a level of 0.1% by weight. Optionally, a second catalyst may be added, providing additional benefits in terms of colour stability. This second catalyst, added in addition to ammonium hypophosphite, is preferably a finely ground sodium hypophosphite added at a level of between 0.1 and 1.0% by weight and specifically 0.5%.

The reactive extrusion to form the prepolymer is suitably carried out at a temperature from 100-350 °C, preferably from 100-320 °C. The reaction temperature may vary along the length of the extruder barrel forming a temperature profile.

As indicated above, although a number of nylon salts based upon aromatic dicarboxylic acids may be extruded in the manner described here, the most preferred salt is TPA/TMHMD and the following description of the process will be based upon this. TPA/TMHMD oligomers are used as feedstock for the formation of Type M and Type MB compositions in subsequent processing steps.

To carry out the process described herein, the twin-screw extruder of choice should be set up to provide the extruder barrel with the following zones:

1. powder feed zone
2. powder conveying zone between zone 1 and zone 3
3. powder seal, separating zone 2 from zone 4 and being capable of preventing escape of volatile matter from zone 4 to zone 2
4. melt and react zone
5. melt seal, separating zone 4 from zone 6 and being capable of restricting premature escape of any volatile products from zone 4 prior to prepolymer formation
6. devolatilisation zone, wherein all volatile materials are removed under vacuum, and
7. metering and pumping zone.

Thus zones 1 and 2 enable the nylon salt/catalyst mix to be fed onto the extruder screws and transported to zone 4 where melting of the nylon salt and a substantial part of the condensation reaction to form the prepolymer is carried out. Upon melting in zone 4, the nylon salt produces water as a by-product. Vapour formed from water, volatile diamine and decomposition products is prevented from entering zone 2 (and potentially zone 1) by the powder seal in zone 3, which is formed by compaction of the nylon salt powder against the internal cross section of the extruder barrel by a flightless section of the screw. Similarly a melt seal exists in zone 5 to restrict flow of vapour from zone 4 into zone 6. The melt seal is suitably formed by use of non-conveying mixing discs or reverse flighted screw elements of narrow pitch dependant upon extruder type and the position of the barrel where the screw fits tightly into the internal cross-section of the barrel. The melt seal ensures that sufficient containment of volatile reactants occurs within the reaction zone and that stoichiometric imbalance in zone 4 is minimised. On reaching zone 6, the melt is conveyed (using wide pitch screw elements to ensure efficient melt surface renewal and devolatilisation through thin melt films) for extrusion or finishing and subject to devolatilisation under vacuum. This removes all water vapours, unreacted diamines and volatile decomposition products. It should be noted that efficient vacuum devolatilisation is necessary to (i) achieve acceptable degrees of conversion to prepolymer, (ii) avoid the formation of highly coloured decomposition/by-products (which can also be aided by use of a nitrogen gas bleed in the feed and devolatilisation zones) and (iii) minimise the amount of water of condensation required to be removed during subsequent polymerisation steps to form high molecular weight polymers. Following vacuum devolatilisation in the venting zone 6, the prepolymer melt is conveyed and either extruded through an appropriate die or transferred to a suitable device for finishing (conversion of prepolymer to high molecular weight polymer). The finishing device may be (i) an extension of the extruder barrel used for prepolymer formation ie extruder of greater length or a separate device (eg thin film reactor, of which a Filmtruder, sold by BUSS(UK), is an example), or (ii) a second twin screw extruder. A gear pump may be used to convey melt from the extruder used for prepolymer formation into the finishing device. Additionally, a heated connecting pipe, of appropriate dimensions, may also be used for melt transfer between the two devices. If the prepolymer formed is extruded and collected for subsequent polymerisation, granulation of the extruded melt is necessary using an appropriate machine.

Extruder variables which affect the properties of the polyamide prepolymer are feed rate, screw speed, screw element composition, temperatures in the extruder barrel and vacuum levels. As an example to illustrate the process, conditions for the successful preparation of TPA/TMHMD prepolymer are described in Table 1 below. Data for the extrusion process is given in Table 2 and indicates the effect of the above variables, including the effect of catalyst type and concentration and illustrates the effects upon prepolymer colours and molecular weight. The optimised screw element compositions derived for a Betol BTS 40 twin-screw extruder is given in Table 3.

A specific embodiment of the present invention is the powder seal which prevents ingress of vapour into the powder feeding zones which in turn can disrupt feed characteristics.

A general example of the extrusion process is given in Example 2 and forms the basis for all extruder runs described in this specification.

A schematic diagram of the process used is presented in Diagram 1.

The process of the present invention is particularly suited to the production of oligomeric precursors of Type M and Type MB polyamides, as defined above, especially on a large scale.

The process of the present invention has the following advantages over the preparation of polyamide prepolymers via a conventional stirred reactor:

(i) The process avoids the need to evaporate large volumes of water prior to polycondensation;

(ii) the heat-up time to melt formation from the nylon salt and the significantly shorter residence time in the reactor (extruder) ensures that the reaction mixture is exposed to high temperatures for a very short period of time, thereby minimising thermally induced degradation and gel formation;

(iii) it is a true continuous process in comparison with, at best, a semi-continuous process for a conventional reactor;

(iv) the prepolymer has been found to have a narrower molecular weight distribution ie a low polydispersity index, and hence the final polyamide product is likely to have better mechanical properties;

(v) the extruder can handle much higher melt viscosities, if required; and

(vi) the extruder provides better heat transfer and agitation.

The process of the present invention offers the following improvements over prior art:

(i) the use of the powder seal allows the performance of polyamidation reactions without escape of volatiles into the feed section,

(ii) complete removal of volatile materials in the devolatilisation section ensures decomposition products and by-products are elminated, and

(iii) the process represents a significant improvement over current methods in terms of convenience, reduced costs and improvements in product.

## Example 1

### Inherent viscosity and molecular weight measurements on polyamides

0.15% w/v solutions of the polyamide prepolymer were prepared by dissolving the material in concentrated sulphuric acid (98.0% ex BDH Ltd Analar grade) over a period of 12 hours at 25°C.

Solution flow times were determined in a BS/U Type D U-tubeviscometer suspended in a Townson and Mercer Series IV viscometer bath controlled at 25°C ± 0.01°C. The inherent viscosity was calculated according to the relationship:

inh = [1n($^{t}$/to)]/C

where C = concentration in, g/100cm$^3$

t = solution flow time, seconds

to = solvent flow time, seconds

$\eta$inh = inherent viscosity, dl/g

No corrections were made for kinetic energy or end effects.

The inherent viscosity of the prepolymer solution is related to the molecular weight of the prepolymer via the Mark-Houwink equation:

$\eta inh = K_v(M_n)^d$

where $K_v$ and d are constants for the prepolymer/solvent system, determined from data obtained by gel permeation chromatography as 6.067 x $10^{-4}$ and 0.765 repsectively.

Example 2

General description of extrusion process

TPA/TMHMD prepolymer of inherent viscosity $0.29dlg^{-1}$ (measured as described in Example 1) was prepared as follows. Finely powdered ammonium hypophosphite, at a level of 0.1% by weight, was dispersed in dry (moisture content <0.2% by weight) TPA/TMHMD nylon salt and the mixture fed into a Betol BTS4O twin screw extruder (40mm screw diameter, 21:1 L/D, via a "K-Tron" volumetric feeder at a feed rate of $1.2Kghr^{-1}$. Screw speed was set at 100rpm and extruder barrel temperatures were preset to 130/310/300/270/260/230 °C for barrel sections 1 to 5 and die respectively. Once output was observed, a vacuum was generated in the extruder barrel via a vacuum pump and reduced to 20in.Hg using a nitrogen gas bleed. The bubble free extrudate thus formed was collected in a water bath and granulated for subsequent processing steps.

TABLE 1

| Conditions for the formation of TPA/TMHMD prepolymer via reactive extrusion | |
|---|---|
| SCREW SPEED | 100rpm |
| OUTPUT | $1.2\text{-}1.5Kghr^{-1}$ |
| BARREL SECTION TEMPERATURES 1 | 140 °C |
| 2 | 300 °C |
| 3 | 310 °C |
| 4 | 280 °C |
| 5 | 270 °C |
| Die | 210 °C |
| VACUUM | Set at 25 in.Hg, reduced to 20 in.Hg with $N_2$ bleed. |

TABLE 2

Experimental assessment of effects of extrusion parameters upon prepolymer properties

Nylon salt feedstock = TPA/TMHMD

| RUN NO. | AHP LEVEL %wt | OUTPUT Kg/hr | SCREW SPEED/rpm | ZONE 1 TEMP ° C | ZONE 2 TEMP ° C | ZONE 3 TEMP ° C | ZONE 4 TEMP ° C | ZONE 5 TEMP ° C | DIE TEMP ° C | VACUUM inHg | IV dl/g | COLOUR (1-5) |
|---|---|---|---|---|---|---|---|---|---|---|---|---|
| 1 | 0.1 | 1.2 | 100 | 100 | 260 | 270 | 270 | 260 | 230 | 5 | 0.37 | 3 |
| 2 | 0.2 | 1.2 | 100 | 140 | 280 | 260 | 260 | 260 | 230 | 15 | 0.21 | 3 |
| 3 | 0.2 | 1.2 | 100 | 140 | 280 | 250 | 250 | 250 | 230 | 15 | 0.21 | 2 |
| 4 | 0.2 | 1.2 | 100 | 140 | 280 | 240 | 240 | 240 | 230 | 15 | 0.13 | 2 |
| 5 | 0.1 | 1.2 | 100 | 130 | 280 | 275 | 265 | 260 | 230 | 12.5 | 0.24 | 3 |
| 6 | 0.1 | 1.2 | 100 | 130 | 280 | 275 | 265 | 260 | 230 | 12.5 | 0.15 | 3 |
| 7 | 0.1 | 1.2 | 100 | 130 | 290 | 290 | 270 | 260 | 220 | 25 | 0.22 | 2 |
| 8 | 0.1 | 1.2 | 100 | 130 | 300 | 300 | 270 | 260 | 220 | 25 | 0.23 | 2 |
| 9 | 0.1 | 1.2 | 100 | 130 | 310 | 310 | 270 | 260 | 220 | 25 | 0.24 | 2 |
| 10 | 0.1 | 1.2 | 100 | 130 | 320 | 320 | 270 | 260 | 220 | 25 | 0.2 | 2 |
| 11 | 0.1 | 1.2 | 200 | 130 | 320 | 320 | 270 | 260 | 220 | 25 | 0.2 | 4 |
| 12 | 0.1 | 1.2 | 100 | 130 | 310 | 300 | 270 | 260 | 230 | 6 | 0.29 | 2 |
| 13 | 0.1 | 1.20 | 100 | 130 | 310 | 300 | 270 | 260 | 225 | 6 | 0.3 | 2 |
| 14 | 0.1 | 1.2 | 100 | 130 | 310 | 300 | 270 | 260 | 230 | 12 | 0.26 | 3 |
| 15 | 0.1 + 0.5% NaHP | 1.2 | 100 | 130 | 310 | 300 | 270 | 260 | 220 | 11 | 0.28 | 2 |
| 16 | 0.1 + 0.3% NaHP | 1.2 | 100 | 140 | 310 | 300 | 280 | 260 | 240 | 20 | 0.36 | 2 |
| 17 | 0.1 + 0.3% NaHP | 1.2 | 100 | 140 | 310 | 300 | 280 | 260 | 240 | 20 | 0.33 | 2 |
| 18 | 0.1 + 0.3% NaHP | 1.2 | 100 | 140 | 310 | 300 | 280 | 260 | 240 | 20 | 0.32 | 2 |
| 19 | 0.1 + 0.3% NaHP | 1.2 | 100 | 140 | 310 | 300 | 280 | 260 | 220 | 20 | 0.37 | 2 |

Table 3

| Optimised screw element compostion for prepolymer formation. | | | | | | | | | | | | |
|---|---|---|---|---|---|---|---|---|---|---|---|---|
| ELEMENT | 36/F | 16/F | S | MD X4 | 12 | TL X4 | 12 | 12 | MD X3 | 24 | 16 | 12 |
| LENGTH/MM | 120 | 80 | 20 | 45 | 80 | 20 | 800 | 80 | 35 | 150 | 80 | 80 |
| Total length of screw = 870mm | | | | | | | | | | | | |
| KEY: | | | | | | | | | | | | |
| numeral, x = standard forward-flighted screw with pitch of x mm and having a closed trapezoidal profile.<br>numeral/F = open profile feed screw.<br>MD = mixing/melting/barrier discs.<br>TL = trilobal kneading elements.<br>S = neutral spacer giving 5mm ($^1/_8$D) wall clearance | | | | | | | | | | | | |

## Claims

1. A process for producing polyamide prepolymers having a number average molecular weight from 3000-5000, said prepolymers being derivable by condensation of solid nylon salts formed from monomeric dicarboxylic acid(s) and monomeric diamine(s) in stoichiometric amounts, characterised in that the condensation process is carried out in the presence of a catalyst under the influence of heat and vacuum in an extruder.

2. A process according to Claim 1 wherein the extruder is a screw extruder.

3. A process according to Claim 1 or 2 wherein the extruder is a twin-screw extruder of the fully intermeshing screw type with both screws rotating in the same direction.

4. A process according to any one of the preceding Claims wherein the monomeric dicarboxylic acid is an aromatic dicarboxylic acid and the monomeric diamine is an aliphatic, cycloaliphatic or an aromatic diamine.

5. A process according to any one of the preceding Claims wherein the prepolymer has an inherent viscosity of up to 0.4dl/g.

6. A process according to any one of the preceding Claims wherein a polycondensation catalyst is added to the solid nylon salt prior to feeding the nylon salt into the extruder.

7. A process according to Claim 6 wherein the catalyst is thoroughly mixed with and dispersed in the nylon salt prior to feeding the salt into the extruder.

8. A process according to Claim 6 or 7 wherein the catalyst is selected from polyphosphoric acid, ammonium hypophosphite and a metal hypophosphite.

9. A process according to any one of the preceding Claims wherein the extruder has a barrel which has the following zones:

a) a powder feed zone (1);

b) a powder conveying zone (2) interspersed between zone (1) and a powder seal zone (3);

c) the powder seal zone (3) being interspersed between zone (2) and a melt and reaction zone (4) such that zone (3) is capable of preventing escape of volatile matter from zone (4) into zone (2);

d) a melt seal zone (5) separating the melt and reaction zone (4) from a devolatilisation zone (6) and being capable of restricting premature escape of any volatile products from zone (4) prior to prepolymer formation;

e) means for removing all volatile materials from zone (6) under vacuum; and

f) a metering and pumping zone (7) such that the solid nylon salt/catalyst mixture fed to the extruder in zones (1) and (2) is transported to zone (4) where melting of the nylon salt and a substantial part of the condensation reaction to form the prepolymer takes place, the powder seal zone (3) preventing any water vapour formed in situ, volatile diamines and decomposition products of the reaction formed in zone (4) from entering zone (2), and similarly the melt seal zone (5) preventing such products from zone (4) entering zone (6), and conveying in zone (6) the melt for extrusion or finishing after devolatilisation under vacuum.

10. A process according to Claim 9 wherein the powder seal zone (3) is formed by compact ion of the nylon salt powder against the internal cross-section of the extruder barrel by a flightless section of the screw.

11. A process according to Claim 9 or 10 wherein the melt seal zone (5) is formed by use of non-conveying mixing discs or reverse flighted screw elements of narrow pitch such that the screw fits tightly into the internal cross-section of the barrel.

DIAGRAM 1

Schematic representation of extruder set-up

(Preparation of TPA/TMHMD prepolymer by reactive extrusion)

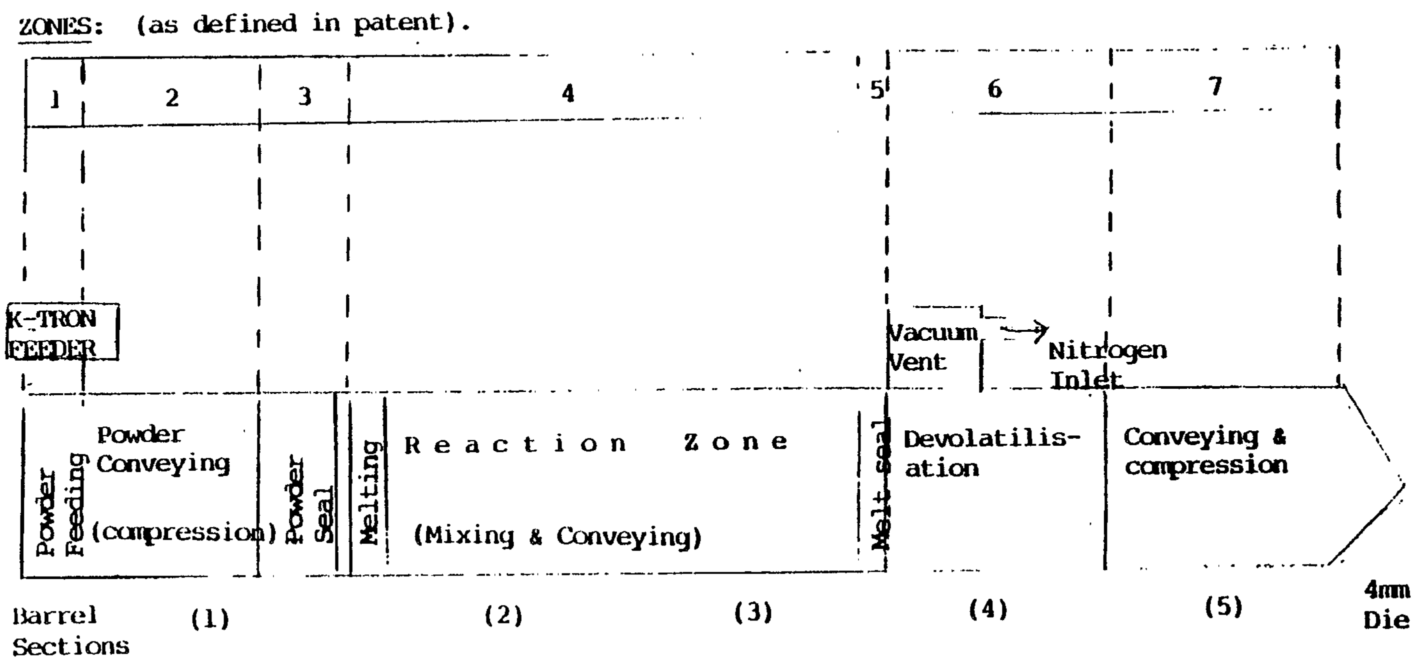


BETOL BTS 40 Twin-Screw extruder (21:1 L/D)

TABLE 4

Powder seal characteristics (not to scale)

BETOL BTS40 Twin Screw Extruder

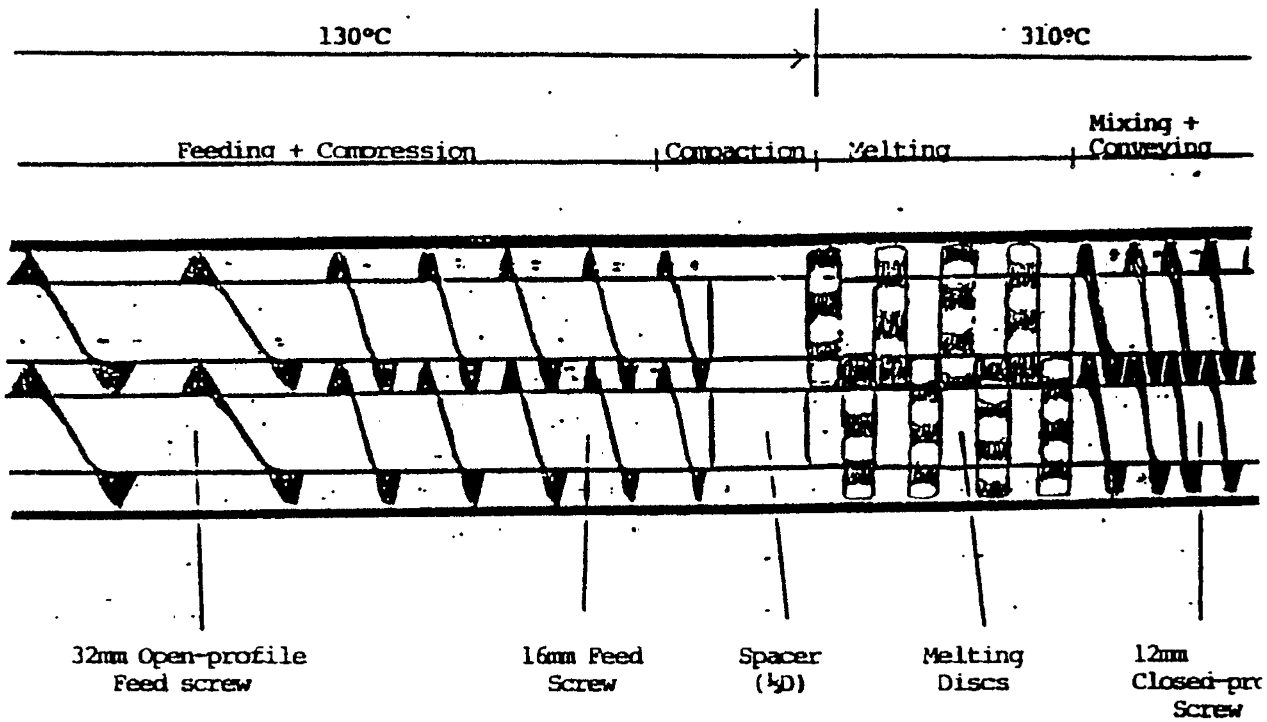

European Patent Office

# EUROPEAN SEARCH REPORT

Application Number

EP 90 30 7918

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| A | US-A-4 760 129 (E. HAERING et al.)<br>----- | | C 08 G 69/28<br>C 08 G 69/30 |
| | | | TECHNICAL FIELDS SEARCHED (Int. Cl.5) |
| | | | C 08 G |
| | The present search report has been drawn up for all claims | | |

| Place of search | Date of completion of the search | Examiner |
|---|---|---|
| THE HAGUE | 11-10-1990 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)